(19)

Europäisches
Patentamt
European
Patent Office
Office européen
des brevets

(11) **EP 4 198 783 A1**

(12) # EUROPEAN PATENT APPLICATION
published in accordance with Art. 153(4) EPC

(43) Date of publication:
**21.06.2023 Bulletin 2023/25**

(21) Application number: **22742073.4**

(22) Date of filing: **13.01.2022**

(51) International Patent Classification (IPC):
***G06F 21/60*** *(2013.01)*

(52) Cooperative Patent Classification (CPC):
**H04L 9/0825**

(86) International application number:
**PCT/CN2022/071876**

(87) International publication number:
**WO 2022/156594 (28.07.2022 Gazette 2022/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.01.2021 CN 202110084293**

(71) Applicant: **Tencent Technology (Shenzhen)
Company Limited
Shenzhen, Guangdong 518057 (CN)**

(72) Inventors:
• **CHENG, Yong
Shenzhen, Guangdong 518057 (CN)**
• **TAO, Yangyu
Shenzhen, Guangdong 518057 (CN)**
• **LIU, Shu
Shenzhen, Guangdong 518057 (CN)**

(74) Representative: **Gunzelmann, Rainer
Wuesthoff & Wuesthoff
Patentanwälte PartG mbB
Schweigerstraße 2
81541 München (DE)**

(54) **FEDERATED MODEL TRAINING METHOD AND APPARATUS, ELECTRONIC DEVICE, COMPUTER PROGRAM PRODUCT, AND COMPUTER-READABLE STORAGE MEDIUM**

(57) A federated model training method and apparatus, an electronic device, a computer program product, and a computer-readable storage medium. The method is executed by an electronic device and comprises: obtaining a first sample set matching a first service party device in a service data processing system, and a second sample set matching a second service party device in the service data processing system; determining a virtual sample matching the first service party device according to the first sample set; determining an intersection of the sample sets on the basis of the virtual sample and the second sample set matching the second service party device; determining a first key set matching the first service party device and a second key set matching the second service party device; determining a training sample matching the service data processing system on the basis of the first key set and the second key set; and training a federated model corresponding to the service data processing system on the basis of the training sample.

FIG. 3

**Description**

RELATED APPLICATION

This application claims priority to Chinese Patent Application No. 202110084293.6 filed on January 21, 2021, which is incorporated herein by reference in its entirety.

FIELD OF THE TECHNOLOGY

This application relates to the technical field of data processing in cloud networks, and relates to, but is not limited to, a federated model training method and apparatus, an electronic device, a computer program product, and a computer-readable storage medium.

BACKGROUND OF THE DISCLOSURE

In response to that different service sides share part of service data, it is necessary to ensure the security of multi-side calculation, that is, a plurality of sides jointly calculate a result of a function without leaking input data of each side to this function, and the calculation result is disclosed to one or more sides. In the related art, due to the defects of encrypted transmission, privacy data of users is often leaked. At the same time, in response to a large volume of service data to be processed, the computational complexity of a power modulo operation in the traditional commutative encryption function structure is relatively high, and the hardware overhead of the encryption process is relatively large, which makes the user wait for a longer time, increases the cost of hardware use, and is thus not conducive to the implementation of service data processing in a mobile device.

SUMMARY

In view of this, embodiments of this application provide a federated model training method and apparatus, an electronic device, a computer program product, and a computer-readable storage medium, which can reduce the computational cost, complete a task of determining a federated model parameter and improve the efficiency of data processing in response to that data is not exchanged, and can implement the processing of data in a mobile device and ensure that privacy data is not leaked.

The technical solutions of the embodiments of this application are implemented as follows:

An embodiment of this application provides a federated model training method, which is executed by an electronic device. The method includes:

acquiring a first sample set associated with a first service side device in a service data processing system, and a second sample set associated with a second service side device in the service data processing system;

determining a virtual sample according to the first sample set;

determining a sample set intersection based on the virtual sample and the second sample set;

obtaining a first key set of the first service side device and a second key set of the second service side device;

processing the sample set intersection using the first key set and the second key set to obtain a training sample; and

training a federated model based on the training sample.

An embodiment of this application provides a federated model training apparatus. The apparatus includes:

an information transmission module configured to acquire a first sample set associated with a first service side device in a service data processing system, and a second sample set associated with a second service side device in the service data processing system; and

an information processing module configured to determine a virtual sample according to the first sample set, wherein

the information processing module is configured to determine a sample set intersection based on the virtual sample and the second sample set;

the information processing module is configured to obtain a first key set of the first service side device and a second key set of the second service side device;

the information processing module is configured to process the sample set intersection using the first key set and the second key set to obtain a training sample; and

the information processing module is configured to train a federated model based on the training sample.

An embodiment of this application further provides an electronic device, including: a memory, configured to store executable instructions; a processor, configured to implement, when executing the executable instructions stored in the memory, the federated model training method.

This application further provides a computer program product or a computer program. The computer program product or the computer program includes computer instructions, and the computer instructions are stored in a computer-readable storage medium. A processor of an electronic device reads the computer instructions from the computer-readable storage medium, and executes the computer instructions, so that the electronic device performs the federated model training method provided in the various optional implementations in the different embodiments and combinations thereof.

The embodiments of this application further provide a computer-readable storage medium, storing executable instructions, the executable instructions, when executed by a processor, implementing the foregoing federated model training method.

This embodiment of this application has the following beneficial effects:

in the embodiments of this application, the virtual sample associated with the first service side device is determined according to the acquired first sample set, and the sample set intersection is determined based on the virtual sample, such that the accurate sample set intersection can be determined, and the accurate training sample can be acquired based on the sample set intersection, thereby achieving accurate and effective training of the federated model; and in addition, the entire model training process can reduce the computational cost in the case of ensuring that data is not exchanged, thereby improving the efficiency of data processing, and can implement the processing of service data in a mobile device after the completion of training and ensure that privacy data is not leaked.

BRIEF DESCRIPTION OF THE DRAWINGS

FIG. 1 is a schematic diagram of a usage environment of a federated model training method provided by an embodiment of this application;

FIG. 2 is a schematic structural diagram of a federated model training apparatus provided by an embodiment of this application;

FIG. 3 is an optional schematic flowchart of a federated model training method provided by an embodiment of this application;

FIG. 4 is a schematic diagram of a data processing process of a federated model training method provided by an embodiment of this application;

FIG. 5 is a schematic diagram of a data processing process of a federated model training method provided by an embodiment of this application;

FIG. 6 is a schematic diagram of a data processing process of a federated model training method provided by an embodiment of this application;

FIG. 7 is an optional schematic flowchart of a federated model training method in an embodiment of this application;

FIG. 8 is a schematic diagram of a data processing process of a federated model training method provided by an embodiment of this application; and

FIG. 9 is an optional schematic flowchart of a federated model training method in an embodiment of this application.

DESCRIPTION OF EMBODIMENTS

To make the objectives, technical solutions, and advantages of this application clearer, the following describes this application in further detail with reference to the accompanying drawings. The described embodiments are not to be considered as a limitation to this application. All other embodiments obtained by a person of ordinary skill in the art without creative efforts shall fall within the protection scope of this application.

In the following descriptions, related "some embodiments" describe a subset of all possible embodiments. However, it may be understood that the "some embodiments" may be the same subset or different subsets of all the possible embodiments, and may be combined with each other without conflict.

Before the embodiments of this application are further described in detail, nouns and terms involved in the embodiments of this application are described. The nouns and terms provided in the embodiments of this application are applicable to the following explanations.

1) Service side devices include, but are not limited to: a common service side device and a dedicated service side device, wherein at least one connection mode of long connection and short connection is maintained between the common service side device and a service data transmission channel, the dedicated service side device maintains a long connection with the transmission channel, and the dedicated service side device may be a server.

2) A client serves as a carrier that implements a specific function in the service side device. For example, a mobile client (APP) serves as a carrier of a specific function in the service side device.

3) "In response to" is used for representing a condition or status on which one or more operations to be performed depend. When the condition or status is satisfied, the one or more operations may be performed immediately or after a set delay; Unless explicitly stated, there is no limitation on the order in which the plurality of operations are performed.

4) Federated learning is a machine learning framework that can effectively help a plurality of institutions perform data usage and machine learning modeling while meeting the requirements for user privacy protection, data security and regulations. Federated learning can effectively solve the problem of data silos, allowing participants to jointly model without sharing data, which can technically break through data silos and achieve collaboration. A machine learning model that is trained based on the federated learning technology is referred to as a federated model.

(5) Blockchain, is an encrypted chain storage structure for transaction formed by a block. For example, a header of each block may not only comprise hash values of all transactions in the block, but also comprise hash values of all transactions in a previous block, to implement anti-tampering and anti-counterfeiting of a transaction in a block based on hash values; After a newly generated transaction is filled into the block and undergoes the consensus of nodes in a block chain network, it will be appended to the end of the block chain to form a chain growth.

(6) A blockchain network is a set of a series of nodes in which a new block is added into a blockchain in a consensus manner, each service side device can be used as a different blockchain node in the blockchain network.

7) A model parameter is a quantity that uses a common variable to establish a relationship between a function and a variable. In an artificial neural network, a model parameter is usually a real number matrix.

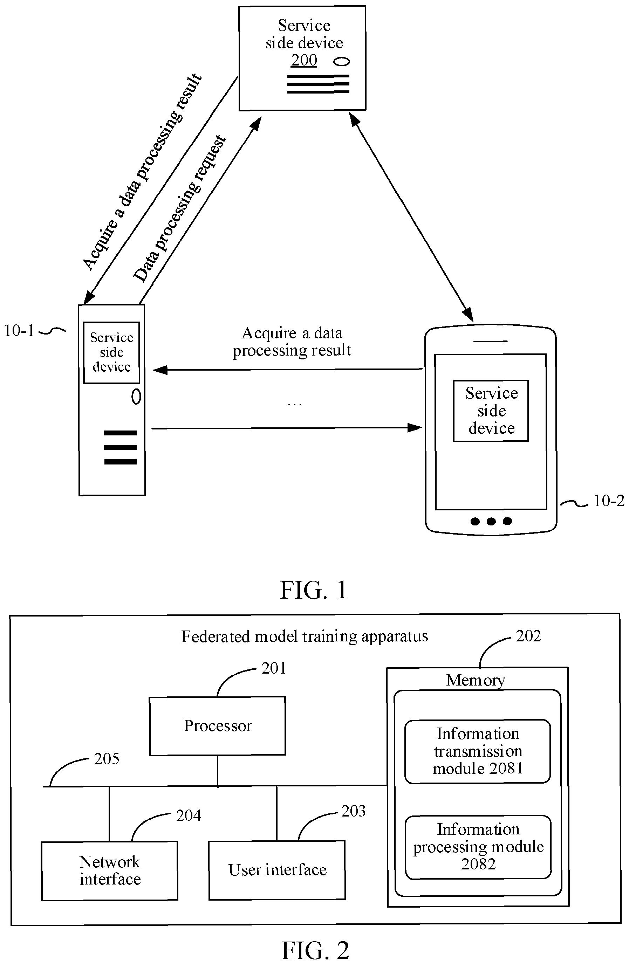

FIG. 1 is a schematic diagram of a usage environment of a service data processing method provided by an embodiment of this application. The service data processing method is implemented by using a federated model trained by a federated model training method in an embodiment of this application. Referring to FIG. 1, service side devices (including a service side device 10-1 and a service side device 10-2) are respectively set with a client of software capable of displaying resource transaction data, e.g., a client or plug-in that performs financial activities through virtual resources or physical resources or makes a payment through virtual resources. A user can obtain resource transaction data through the client of software, display the resource transaction data and trigger a fraud identification process during a virtual resource change process (e.g., a payment process in an instant messaging application or a financial lending process in a program in the instant messaging application). In this process, the user's risk needs to be judged by a data processing apparatus deployed on a server, and it is expected to acquire processing results of service data in other institutions without acquiring any privacy data of other institutions' nodes. A prediction result is obtained by performing auxiliary analysis based on the processing results, so as to determine a risk level of a target user through the prediction result (e.g., whether to perform lending can be determined according to the risk level). Different service side devices can be directly connected to a service side device 200.

Of course, a federated model training apparatus provided in an embodiment of this application is used for obtaining a federated model by training. The federated model may be applied to virtual resources or physical resources for financial activities, or to a payment environment (including, but not limited to, a changing environment of various types of physical financial resources, an electronic payment and shopping environment, and a usage environment for anti-cheating during e-commerce shopping) through physical financial resources, or to a usage environment of social software for information interaction. Financial information from different data sources is usually processed in financial activities performed through various types of physical financial resources or in payments performed through virtual resources. Finally, target service data of a service data processing system determined by a sorting result of samples to be tested is presented on a user interface (UI) of the service side device.

In some embodiments of this application, the federated model training process may be completed by a computing platform. The computing platform may be a platform provided in a trusted third side device, or may be a platform provided in one data side among a plurality of data sides or a platform distributed in a plurality of data sides. The computing platform can interact data with various data sides. A plurality of service sides in FIG. 1 (which may be data side servers holding different service data) may be data sides of the same data category, e.g., all are data sides of a financial category or all are data sides of a shopping platform. A plurality of data sides may be data sides of different categories. For example, the service side device 10-1 is a data side of a shopping platform, and the service side device 10-2 is a data side of a lending platform. Alternatively, in the above example, the service side device 10-1 is a data owner of contact information, and the service side device 10-2 is a service provider, and the like. In a service data processing scenario, service data provided by these data sides is usually service data of the same type. For example, in response to that the service side device 10-1 is the data side of the shopping platform and the service side device 10-2 is the data side of the lending platform, if the shopping platform is bound with a payment bank card number, and the lending platform is bound with a withdrawal and repayment bank card number, service data provided by both sides for service data processing may be bank card numbers and transfer information or loan information. If both the data side of the shopping platform and the data side of the lending platform have registered user's phone number, the service data provided by both sides for service data processing may be the phone numbers. In other service scenarios, the service data may also include other data, which will not be listed here.

As an example, either the service side device 200 or the service side device 10-1 may be used to deploy a federated model training apparatus to implement a federated model training method provided by an embodiment of this application. Taking the service side device 200 as an example, the service side device 200 can acquire data processing requests from the service side device 10-1 and the service side device 10-2, responds to the data processing requests with service data processing to obtain a data processing result, and returns the data processing result to the service side device 10-1 and the service side device 10-2 correspondingly. Alternatively, the service side device 10-1 and the service side device 10-2 may also interact and share data to obtain a data processing result.

In the process of implementing federated model training in this embodiment of this application, the federated model training apparatus is configured to acquire a first sample set associated with a first service side device in a service data processing system, and a second sample set associated with a second service side device in the service data processing system, wherein the service data processing system includes at least the first service side device and the second service side device; determine a virtual sample according to the first sample set; determine a sample set intersection based on the virtual sample and the second sample set; obtain a first key set of the first service side device and a second key set of the second service side device; process the sample set intersection using the first key set and the second key set to determine a training sample; and train a federated model based on the training sample to determine a federated model parameter.

The structure of the federated model training apparatus in this embodiment of this application will be described in detail below. The federated model training apparatus can be implemented in various forms, such as a dedicated service side device with a processing function of the federated model training apparatus, or a server or server group with the processing function of the federated model training apparatus, e.g., a service information processing process deployed in the service side device 10-1, e.g., the service side device 200 shown in FIG. 1. FIG. 2 is a schematic structural diagram of compositions of a federated model training apparatus according to an embodiment of this application. It may be understood that FIG. 2 shows only an exemplary structure rather than all structures of the federated model training apparatus. A part of the structure or the entire structure shown in FIG. 2 may be implemented based on requirements.

A federated model training apparatus provided in this embodiment of this application includes: at least one processor 201, a memory 202, a user interface 203, and at least one network interface 204. Various components in the federated model training apparatus are coupled together through a bus system 205. It may be understood that the bus system 205 is configured to implement connection and communication between the components. In addition to a data bus, the bus system 205 further includes a power bus, a control bus, and a state signal bus. However, for ease of clear description, all types of buses are marked as the bus system 205 in FIG. 2.

The user interface 203 may include a display, a keyboard, a mouse, a trackball, a click wheel, a key, a button, a touchpad, or a touch screen.

It may be understood that, the memory 202 may be a volatile memory or a non-volatile memory, or may include both a volatile memory and a non-volatile memory. The memory 202 in the embodiments of this application can store data to support operation of the service side device (for example, the service side device 10-1). Examples of these data include: any computer program, such as an operating system and an application, for operation on a service side device, such as a service side device 10-1. The operating system includes various system programs, such as framework layers, kernel library layers, and driver layers used for implementing various basic service and processing hardware-based tasks. The application program may include various application programs.

In some embodiments, the federated model training apparatus provided in the embodiment of this application may be implemented by a combination of software and hardware. For example, the federated model training apparatus provided in the embodiment of this application may be a processor in the form of a hardware decoding processor, and is programmed to perform the federated model training method provided in the embodiment of this application. For example, the processor in the form of a hardware decoding processor may use one or more application-specific integrated circuits (ASIC), a DSP, a programmable logic device (PLD), a complex PLD (CPLD), a field programmable gate array (FPGA), or another electronic element.

For example, the federated model training apparatus provided in the embodiment of this application is implemented by a combination of software and hardware. The federated model training apparatus provided in the embodiment of this application may be directly embodied as a combination of software modules executed by the processor 201. The software module may be located in a storage medium, the storage medium is located in the memory 202, and the processor 201 reads executable instructions comprised in the software module in the memory 202. The federated model training method provided in the embodiment of this application is completed in combination with necessary hardware (for example, comprises a processor 201 and another assembly connected to the bus 205).

In some embodiments, the federated model training apparatus may be a service data processing apparatus. After a federated model is obtained by the federated model training apparatus by training based on the federated model training method provided in this embodiment of this application, service data is processed by using the federated model. That is to say, the federated model training apparatus mentioned in the embodiments of this application may be an apparatus for performing federated model training or an apparatus for performing data processing on service data. The federated model training apparatus and the service data processing apparatus may be the same apparatus.

For example, the processor 201 may be an integrated circuit chip, and has a signal processing capability, for example, a general purpose processor, a digital signal processor (DSP), or another programmable logical device, a discrete gate or a transistor logical device, or a discrete hardware component. The general purpose processor may be a microprocessor, any conventional processor, or the like.

In an example in which the federated model training apparatus provided in the embodiments of this application is implemented by hardware, the data processing apparatus provided in the embodiments of the present disclosure may be directly executed by using the processor 201 in the form of a hardware decoding processor, for example, one or more ASICs, DSPs, PLDs, CPLDs, FPGAs, or other electronic elements, to execute the federated model training method provided in the embodiments of this application.

The memory 202 in this embodiment of this application is configured to store various types of data to support operations of the federated model training apparatus. Examples of these data include: any executable instruction to be operated on the federated model training apparatus, for example, an executable instruction. A program for implementing the federated model training method of the embodiment of this application may be included in the executable instruction.

In some other embodiments, the federated model training apparatus provided in the embodiment of this application may be implemented by software. FIG. 2 shows the training apparatus for a fusion image processing model stored in the memory 202, which may be software in the form of a program and a plug-in and comprises a series of modules. An example of a program stored in the memory 202 may include a federated model training apparatus. The federated model training apparatus includes the following software modules:

an information transmission module 2081 configured to acquire a first sample set associated with a first service side device in a service data processing system, and a second sample set associated with a second service side device in the service data processing system, wherein the service data processing system includes at least the first service side device and the second service side device; and

an information processing module 2082 configured to determine a virtual sample according to the first sample set.

The information processing module 2082 is further configured to determine a sample set intersection based on the virtual sample and the second sample set.

The information processing module 2082 is further configured to obtain a first key set of the first service side device and a second key set of the second service side device.

The information processing module 2082 is further configured to process the sample set intersection using the first key set and the second key set to obtain a training sample.

The information processing module 2082 is further configured to train a federated model based on the training sample.

According to an electronic device shown in FIG. 2, in an aspect of this application, a computer program product or a computer program is further provided, the computer program product or the computer program including computer instructions, the computer instructions being stored in a computer-readable storage medium. A processor of an electronic device reads the computer instructions from the computer-readable storage medium, and executes the computer instructions, so that the electronic device performs the federated model training method provided in the various optional implementations in the different embodiments and combinations thereof.

The federated model training method provided in this embodiment of this application is described with reference to the federated model training apparatus shown in FIG. 2. Prior to introducing the federated model training method provided in this application, a service data processing method under a financial risk control scenario in the related art will be explained first. In the process of service data processing, due to a large number of service types, each user may have different network data, and some users have labels of some nodes in a network. However, in order to protect privacy data, the users often do not share data with each other. For different service side devices, they do not exchange user data to process service data, for example: in the bank risk control scenario, Bank A hopes to obtain risk ranking of the current customers applying for personal credit, wherein Bank A has historically determined inferior customers, while another Bank B has fund transfer relationships of the same customers. At this time, Bank A fails to calculate a risk level of a target customer by using the fund transfer relationships of Bank B and its own inferior customer labels without accessing fund transfer data of Bank B. Although the risk level of the target customer can be determined by exchanging user data, the user's data privacy will be leaked, resulting in the outflow of user data.

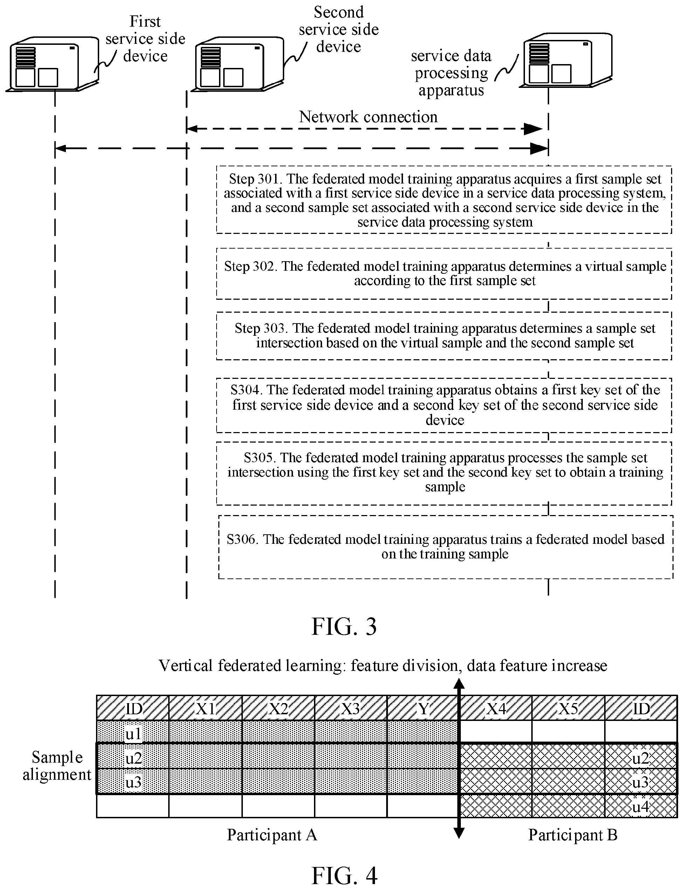

In order to solve the above-mentioned defects, referring to FIG. 3 which is an optional schematic flowchart of a federated model training method provided by an embodiment of this application, it can be understood that the steps shown in FIG. 3 can be executed by various electronic devices that operate the federated model training apparatus. For example, the electronic device may be a server or server group of service data, or a service side device of a service process. The federated model is obtained through training, and then the service data is processed by using the federated model. The method includes the steps 301-303.

In step 301: the federated model training apparatus acquires a first sample set associated with a first service side device in a service data processing system and a second sample set associated with a second service side device in the service data processing system.

The service data processing system includes at least the first service side device and the second service side device. A sample set associated with (or that matches) a service side device may be data corresponding to the service side device, such as data obtained from the service side device, data obtained with the authorization of the service side device, and/or data produced by (or produced in association with) the service side device, etc. Each service side device in the service data processing system may be applied to a scenario of collaborative data query for a plurality of data providers based on a multi-side collaborate query statement, e.g., a case where a plurality of data providers performs collaborate query of privacy data for a multi-side collaborate query statement, or to a vertical federated learning scenario. Vertical federated learning means that, in response to that users of two datasets overlap more but user features overlap less, each dataset can be split vertically (that is, in a feature dimension), and part of the data where the two users are the same but the user features are not exactly the same are taken for training. This approach is referred to as vertical federated learning. For example: there are two different institutions, one is a bank in a certain place, and the other is an e-commerce store in the same place. User groups of these two institutions are likely to include most of the residents in this place, resulting in a large intersection of users. However, the bank records user's income and expenditure behaviors and credit rating, while the e-commerce store keeps user's browsing and purchase histories, so user features of the two institutions have less intersection. The vertical federated learning is to aggregate these different features in an encrypted state to enhance modeling capabilities.

In this embodiment of this application, the data of each data provider is stored in its own data storage system or cloud server, and original data information that each provider needs to disclose may be different. Through the federated model training method provided in this application, processing results of various privacy data processed by different service side devices can be exchanged. At the same time, the original data of respective service side devices is not leaked in this process, and calculation results are disclosed to the respective providers, so as to ensure that each service side device can obtain the corresponding target service data in a timely and accurate manner.

In some embodiments of this application, the step of acquiring the first sample set associated with the first service side device in the service data processing system and the second sample set associated with the second service side device in the service data processing system may be implemented through the following ways: determining, based on a service type of the first service side device in the service data processing system, a sample set associated with the first service side device; determining, based on a service type of the second service side device in the service data processing system, a sample set associated with the second service side device; and performing sample alignment processing on the sample set associated with the first service side device and the sample set associated with the second service side device to obtain the first sample set associated with the first service side device and the second sample set associated with the second service side device.

FIG. 4 is a schematic diagram of a data processing process of a federated model training method provided by an embodiment of this application. Referring to FIG. 4, a participant A and a participant B of the service data processing system have training feature data sets $D_1$ and $D_2$ respectively, wherein the training feature dataset $D_1$ includes at least data of customers u1, u2, and u3, and the training feature dataset $D_2$ includes at least data of customers u2, u3, and u4, that is, the participant A and the participant B have some data features respectively. The participant A and the participant B can expand a data feature dimension or obtain data label information through the vertical federated learning in order to train better models. For example, in two-side vertical federated learning, the participant A (for example, an advertising company) and the participant B (for example, a social network platform) cooperate to jointly train one or more personalized recommendation models based on deep learning. The participant A has some data features, for example, (X1, X2,...,X40), a total of 40-dimensional data features; and the participant B has some data features, for example, (X41, X42,..., X100), a total of 60-dimensional data features. The participant A and the participant B cooperate together to have more data features. For example, the data features of the participant A and the participant B add up to 100-dimensional data features, so a feature dimension of the training data is significantly expanded. For supervised deep learning, at least one of the participant A and the participant B also has label information Y of the training data.

In some embodiments of this application, one of the two participants has no feature data. For example, the participant A has no feature data but only label information.

Before the participant A and the participant B train a vertical federated learning model, their training data and label information need to be aligned, and an intersection of IDs of their training data is filtered out, that is, an intersection of same IDs in the training feature datasets $D_1$ and $D_2$ is solved. For example, if the participants A and B have the feature information XA and XB of the same bank customer respectively, the feature information of the bank customer can be aligned, that is, the feature information XA and XB are combined together during model training to form a training sample (XA, XB). The feature information of different bank customers cannot be constructed into a training sample because it is meaningless to combine them together.

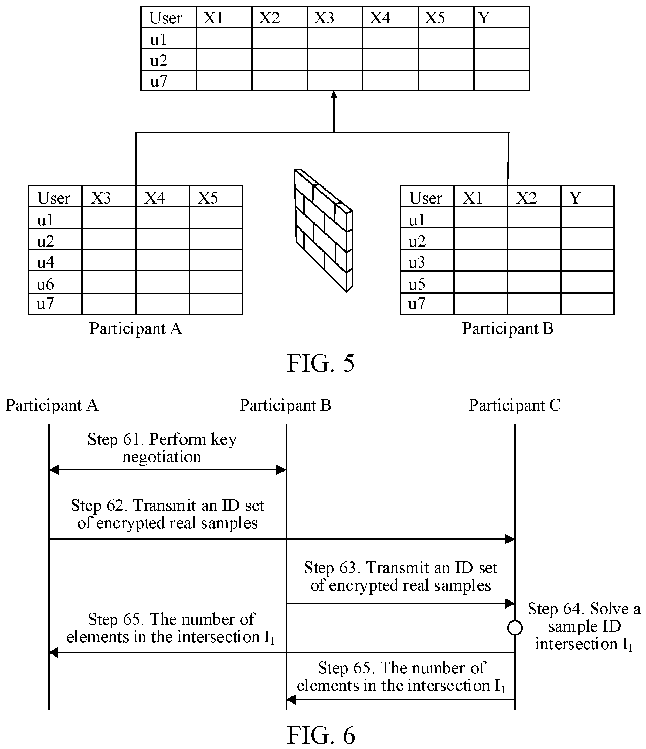

FIG. 5 is a schematic diagram of a data processing process of the federated model training method provided by this embodiment of this application. Referring to FIG. 5, since it is necessary to find out a training sample ID shared by the participant A and the participant B (this process is also known as sample alignment, data alignment, or safe set intersection processing), public customers of the participant A and the participant B, namely customers u1, u2, and u7 need to be found out. For example, an ID of a customer shared by a bank and another e-commerce store can generally be identified by a hash value of a mobile phone number or an ID number as an ID identifier.

In step 302: the federated model training apparatus determines a virtual sample according to the first sample set.

In step 303: the federated model training apparatus determines a sample set intersection based on the virtual sample and the second sample set.

In some embodiments of this application, the step of determining the virtual sample according to the first sample set may be implemented through the following ways:
determining, by the first service side device, a value parameter and a distribution parameter of a sample ID in the first sample set; generating, based on the value parameter and the distribution parameter of the sample ID in the first sample set, the virtual sample associated with the first service side device, wherein the virtual sample may be combined with the first sample set to form the first sample set including the virtual sample; traversing the first sample set including the virtual sample to determine an ID set of the virtual sample; and traversing the second sample set to determine a sample set intersection of the first sample set including the virtual sample and the second sample set. As shown in FIG. 4 and FIG. 5, the participant A randomly generates some virtual sample IDs (and corresponding sample features) according to values and distribution of sample IDs of the participant A. The participant A uses a union set of its own real sample ID set and the generated virtual sample ID set to perform a safe set intersection with a sample ID set of the participant B, thereby obtaining an intersection I. The result is that the intersection I contains a virtual ID and a real ID of the participant A. Although both the participant A and the participant B have known sample ID information in the intersection I, the virtual sample ID here is used to obfuscate the real sample ID, which can protect the real sample ID of the participant A from being exactly known by the participant B.

In some embodiments of this application, the step of determining the virtual sample according to the first sample set is implemented through the following ways:
determining, based on a device type of the first service side device and a device type of the second service side device, a process identifier of a target application process; determining a data intersection set of the first sample set and the second sample set; invoking the target application process based on the process identifier to obtain a first virtual sample set corresponding to the first service side device and a second virtual sample set corresponding to the second service side device, which are output by the target application process; and invoking the target application process based on the data intersection set, the first virtual sample set and the second virtual sample set to obtain a virtual sample output by the target application process, wherein the virtual sample is combined with the first sample set to obtain the first sample set including the virtual sample; traversing the first sample set including the virtual sample to obtain an ID set of the virtual sample; and traversing the first sample set including the virtual sample and the second sample set to obtain the sample set intersection of the first sample set including the virtual sample and the second sample set.

Referring to FIG. 6 in conjunction with FIG. 4 and FIG. 5, FIG. 6 is a schematic diagram of a data processing process of a federated model training method provided by an embodiment of this application. As shown in FIG. 6, the method includes the following steps 61-65.

In step 61, a participant A and a participant B perform key negotiation.

In step 62, the participant A transmits an ID set of real samples encrypted by itself to a participant C.

In step 63, the participant B transmits an ID set of real samples encrypted by itself to the participant C.

In step 64, the participant C calculates and obtains a sample ID intersection $I_1$ according to the ID set of the real samples of the participant A and the ID set of the real samples of the participant B.

In this embodiment of this application, the participant A and the participant B use a third side or a trusted execution environment as a target process to solve a set intersection (PSI) of safe sample IDs, thereby generating a sample ID intersection $I_1$. The sample ID intersection $I_1$ is an intersection of real public sample IDs, excluding virtual sample IDs.

The third side is referred to as the participant C here, as shown in FIG. 3. In this step, the participant A and the participant B can choose to encrypt (or hash) their sample IDs before transmitting them to the participant C. If encrypted transmission is selected, the participant A and the participant B need to perform key negotiation first, and choose the same key, for example, choose the same RSA public key. In addition, if encryption is selected, the participant C can obtain an encrypted sample ID, but cannot decrypt the encrypted sample ID.

The participant C solves an intersection of the sample ID set sent by the participant A and the sample ID set sent by the participant B, which can be completed by a simple comparison. After obtaining the sample ID intersection $I_1$, the participant C will not transmit specific information of the ID intersection $I_1$ to the participant A and the participant B, but will only tell the participant A and the participant B the number of elements in the ID intersection $I_1$. Therefore, neither the participant A nor the participant B knows the specific sample ID in the intersection $I_1$ of their public sample IDs. If the number of elements in the intersection $I_1$ is too small, the vertical federated learning cannot be performed.

In step 65, the participant C transmits the number of elements in the sample ID intersection $I_1$ to the participant A and the participant B, respectively.

In some embodiments, the participant A and the participant B each also generate a virtual sample ID (and a corresponding virtual sample feature). The participant A and the participant B use their real sample ID sets and the generated virtual ID set to solve an intersection of their safe sets to obtain an intersection $I_2$. The sample ID intersection $I_2$ includes the virtual sample IDs. Both the participant A and the participant B know the IDs in the sample ID intersection $I_2$. Because the sample ID intersection $I_2$ includes the virtual sample IDs, neither the participant A nor the participant B knows an exact sample ID of the other side.

In some embodiments of this application, in order to ensure that the sample ID intersection $I_2$ includes the virtual sample IDs, it is required that the virtual sample IDs generated by the participant A and the participant B intersect with the real sample IDs of the other side. To ensure this, the participant A and the participant B can be required to randomly generate virtual sample IDs in the same ID value space. For example, the participant A and the participant B can randomly generate mobile phone numbers in the same mobile phone number segment.

In step 304: the federated model training apparatus obtains a first key set of the first service side device and a second key set of the second service side device.

In step 305: the federated model training apparatus processes the sample set intersection using the first key set and the second key set to obtain a training sample.

In this embodiment of this application, the step of processing the sample set intersection using the first key set and the second key set to obtain the training sample includes: performing, based on the first key set and the second key set, an exchange operation between a public key of the first service side device and a public key of the second service side device to obtain an initial parameter of the federated model; determining a number of samples that matches the service data processing system; and processing the sample set intersection according to the number of samples and the initial parameter to obtain the training sample associated with the service data processing system. The number of samples may be selected by a service side device. The number of samples may match the processing capacity of the service data processing system. According to the number of samples corresponding to a mini-batch gradient descent algorithm, processing the sample set intersection includes selection of batches and mini-batches. For example, the participant A and the participant B respectively generate their own public and private key pairs$(pk_1, sk_1)$and$(pk_2, sk_2)$, and transmit the public keys to each other. No participant will disclose its private key to other participants. The public key is used to perform additive homomorphic encryption on an intermediate calculation result, for example, homomorphic encryption using a Paillier homomorphic encryption algorithm.

The participants A and B generate random masks $R_2$ and $R_1$, respectively. No random mask will be disclosed in clear text by any participant to other participants. The participants A and B randomly initialize their respective local model parameters $W_1$ and $W_2$. In a stochastic gradient descent (SGD) algorithm, in order to reduce the calculation amount, speed up model training and obtain a better training effect, only one mini-batch of training data is processed in each SGD iteration, for example, each mini-batch includes 64 training samples. In this case, the participant A and the participant B need to coordinate the selection of training samples in batches and mini-batches, such that the training samples selected by the two participants in each iteration are aligned.

In step 306: the federated model training apparatus trains a federated model based on the training sample.

In some embodiments of this application, the step of training the federated model based on the training sample to determine a federated model parameter may be implemented through the following ways:

substituting the training sample into a loss function corresponding to the federated model; determining a model updating parameter of the federated model in response to the loss function satisfying a convergence condition; and determining, based on the model updating parameter of the federated model, the federated model parameter of the federated model. In order to realize the impact of adjusting the virtual sample on the model parameter of the federated model, an implementation may be that adjust, by the first service side device, a residual corresponding to the virtual sample corresponding to the model updating parameter, or a degree of impact of the virtual sample on the model parameter of the federated model, in training the federated model based on the training sample. Another implementation may be that trigger a target application process to perform the following processing: adjusting the residual corresponding to the virtual sample corresponding to the model updating parameter, or the degree of impact of the virtual sample on the model parameter of the federated model. A SGD-based model training method requires multiple gradient descent iterations, and each iteration can be divided into two stages: (i) forward calculating an output and a residual (also known as a gradient multiplier) of the model; and (ii) back-propagating and calculating a gradient of a model loss function with respect to the model parameter, and updating the model parameter using the calculated gradient. The above iterations are repeated until a stopping condition is met (e.g., the model parameter converges, or the model loss function 1 converges, or a maximum allowed number of training iterations is reached, or a maximum allowed model training time is reached).

In response to that the residual corresponding to the virtual sample corresponding to the model updating parameter is adjusted by the first service side device, the participant A and the participant B perform federated model training based on the sample intersection I, and the participant A is responsible for the selection of training samples in batches and mini-batches. In order to protect the sample ID of the participant A, the participant A can select some real sample IDs and some virtual sample IDs from the sample intersection I to form a mini-batch. For example, 32 virtual samples and 32 real samples form a mini-batch $X_1^{(m)}$ with 64 samples. m represents the $m^{th}$ mini-batch.

In this embodiment of this application, a virtual sample is deleted from the sample set intersection by using the mini-batch gradient descent algorithm to obtain a training sample associated with the service data processing system. The federated model is trained based on the training sample to determine a federated model parameter. Therefore, the computational cost is reduced in the case of ensuring that data is not exchanged, thereby improving the efficiency of data processing; and the processing of service data can be implemented in a mobile device, thereby saving the user's waiting time and ensuring that privacy data is not leaked.

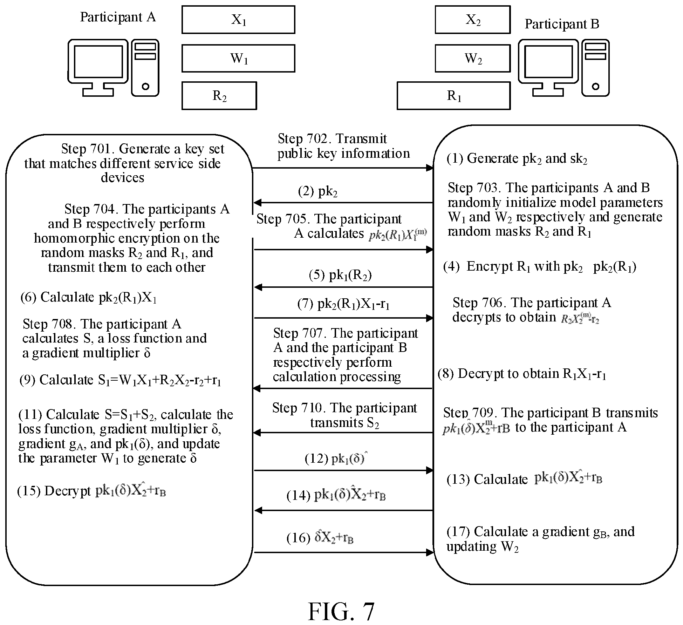

FIG. 7 is an optional schematic flowchart of the federated model training method in this embodiment of this application. Referring to FIG. 7, in response to that the participant A and the participant B perform federated model training based on the sample intersection I, service data processing may include the following steps 701-716.

In step 701: a key set associated with different service side devices is generated.

In step 702: public key information is transmitted.

In step 703: the participants A and B randomly initialize model parameters $W_1$ and $W_2$, respectively, and generate random masks $R_2$ and $R_1$.

In step 704: the participants A and B respectively perform homomorphic encryption on the random masks $R_2$ and $R_1$ and transmit them to each other.

In step 705: the participant A calculates $pk_2(R_1)X_1^{(m)}$. $X_1^{(m)}$ is a training sample of the $m^{th}$ batch owned by the participant A. The participant A generates a random number r1 and transmits $pk_2(R_1)X_1^{(m)}\text{-}r_1$ to the participant B in step 705.

In step 706: the participant A obtains $R_2X_2^{(m)}\text{-}r_2$ by decryption; and the participant B obtains $R_1X_1^{(m)}\text{-}r_1$ by decryption.

In step 707: the participant A and the participant B perform calculation processing respectively.

Therefore, $S_1 = W_1 X_1^{(m)} + R_2 X_2^{(m)} - r_2 + r_1$ and $S_2 = W_2 X_2^{(m)} + R_1 X_1^{(m)} - r_1 + r_2$ can be obtained, respectively,

In step 708: the participant A calculates S, the loss function, the gradient multiplier $\delta$ (also referred to as a residual).

Both S and the gradient multiplier $\delta$ are row vectors, with each element corresponding to each sample in one mini-batch. For example, the participant A calculates $z=S_1+S_2$ and calculates an output $\hat{y}^{(m)}$ of a logistic regression (LogR) model by the following formula (1):

$$\hat{y}^{(m)} = sigmoid(z) = \frac{1}{1 + e^{-z}} \qquad (1);$$

and

calculates a gradient operator (also known as a residual) $\delta^{(m)} = \hat{y}(m) - y^{(m)}$.

The participant A only selects the gradient multiplier corresponding to the real samples in one mini-batch to calculate the gradient and update the model parameter. The participant A sets elements of the corresponding virtual samples in the gradient multiplier $\delta$ to zero. For example, the participant A generates a row vector $\delta = [0, \delta1, 0, \delta3, ...]$, assuming the first and third samples here are virtual samples. In this embodiment of this application, in response to that any service side device uses the trained federated model to process service data, the virtual sample associated with the service side device is set to zero, wherein a service data processing environment after the virtual sample associated with the service side device is set to zero is adapted to a service data processing environment where the service side device is currently located.

In some embodiments of this application, the participant A calculates $\hat{\delta}^{(m)} = \hat{\delta} / N$, wherein N is the number of real samples in the mini-batch $X_1^{(m)}$. This is to calculate an average gradient over a mini-batch. The participant A encrypts $\delta$ with pk1 to obtain $pk_1(\hat{\delta})$.

In step 707, the participant A transmits $pk_1(\hat{\delta})$ to the participant B.

In step 708, the participant B calculates $pk_1(\hat{\delta}) X_2^m + r_B$, assuming that $X_2^m$ is a data matrix of one mini-batch (each row of the matrix is a sample). $r_B$ is a random vector generated by the participant B.

In step 709: the participant B transmits $pk_1(\hat{\delta}) X_2^m + r_B$ to the participant A.

In step 710: the participant transmits $S_2$.

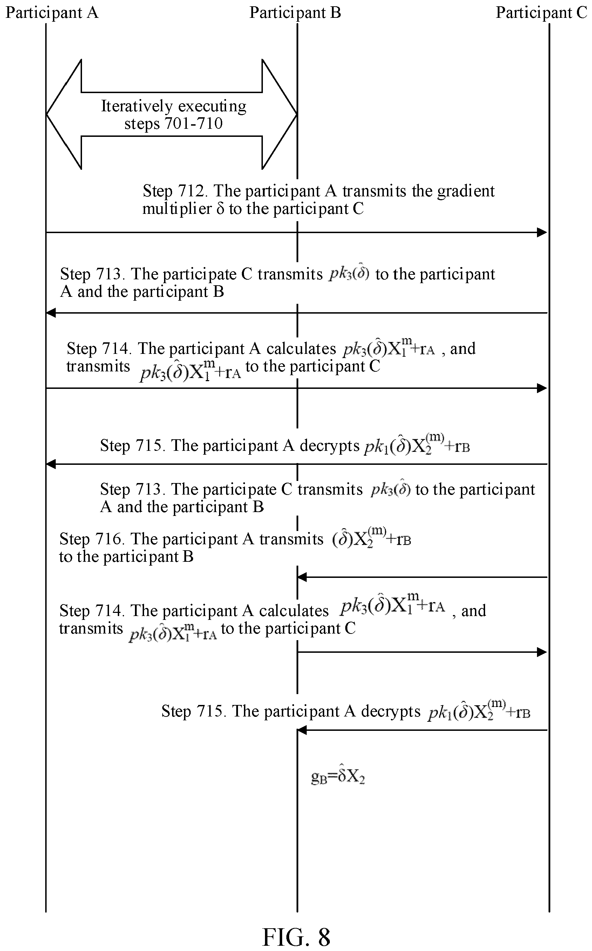

In some embodiments of this application, continuously referring to FIG. 8, the target application process is triggered after the steps shown in FIG. 7 are executed. In response to that the residual corresponding to the virtual sample corresponding to the model updating parameter is adjusted on the basis of the target application process, the participant A and the participant B perform federated model training based on the sample intersection $I_2$, and the participant A is responsible for the selection of training samples in batches and mini-batches. In order to protect the sample ID of the participant A, the participant A can select some real sample IDs and some virtual sample IDs from the sample intersection I to form a mini-batch. For example, 32 virtual samples and 32 real samples form a mini-batch $X_1^{(m)}$ with 64 samples.

The steps 701 to 710 of the federated model training process are completely consistent with the steps described in FIG. 7 and can be performed iteratively. As shown in FIG. 7, in step 708, the participant A calculates S, the loss function, and the gradient multiplier $\delta$ (also referred to as a residual). Both z and the gradient multiplier $\delta$ are row vectors here, with each element corresponding to each sample in one mini-batch. For example, the participant A calculates $z=S1+S2$ and calculates an output $\hat{y}^{(m)}$ of a logistic regression (LogR) model by the following formula (2):

$$\hat{y}^{(m)} = sigmoid(z) = \frac{1}{1 + e^{-z}} \qquad (2);$$

and

calculates a gradient operator (also known as a residual) $\delta^{(m)} = \hat{y}^{(m)} - y^{(m)}$.

The subsequent steps need to be completed with the help of a participant C, as shown in FIG. 8.

In step 712: the participant A transmits the gradient multiplier $\delta$ to the participant C.

The participant C sets elements of the corresponding virtual samples in the received gradient multiplier $\delta$ to zero. For example, $\delta = [0, \delta 1, 0, \delta 3, ...]$, assuming the first and third samples here are virtual samples, and the participant C knows the sample ID (either an encrypted sample ID or a hashed sample ID) in the sample mini-batch $x_1^{(m)}$. The participant C can identify virtual samples through the intersection $I_1$.

In some embodiments of this application, the participant C calculates $\hat{\delta} = \hat{\delta} / N$, wherein N is the number of real samples in the mini-batch $x_1^{(m)}$. The number of real samples in the N mini-batch $x_1^{(m)}$ is selected to calculate an average gradient of the mini-batch, thereby improving the data processing speed. The participant C encrypts $\hat{\delta}$ with its public key pk3 to obtain $pk3(\hat{\delta})$.

In step 713: the participant C transmits $pk3(\hat{\delta})$ to the participant A and the participant B.

In step 714: the participant A calculates $pk_3(\hat{\delta}) x_1^m + r_A$, and transmits $pk_3(\hat{\delta}) x_1^m + r_A$ to the participant C.

$r_A$ is a random vector generated by the participant A. Correspondingly, the participant B calculates $pk_3(\hat{\delta}) x_2^m + r_B$ and transmits $pk_3(\hat{\delta}) x_2^m + r_B$ to the participant C. $r_B$ is a random vector generated by the participant B.

In step 715: the participant A decrypts $pk_1(\hat{\delta}) x_2^{(m)} + r_B$.

In step 716: the participant A transmits $(\hat{\delta}) x_2^{(m)} + r_B$ to the participant B.

In step 715, the participant C decrypts $pk_3(\hat{\delta}) x_1^m + r_A$ and transmits $(\hat{\delta}) x_1^m + r_A$ to the participant A. Correspondingly, the participant C decrypts $pk_3(\hat{\delta}) x_2^m + r_B$ and transmits $(\hat{\delta}) x_2^m + r_B$ to the participant B.

In some embodiments of this application, the participant A calculates a gradient of a model loss function with respect to the model parameter $W_1$. For the logistic regression (LogR) model, the gradient of the model loss function with respect to the model parameter $W_1$ is the following formula (3):

$$gA = \hat{\delta} x_1^m + r_A - r_A = \hat{\delta} x_1^m \qquad (3).$$

The participant A updates the model parameter locally: $W_1 = W_1 - \eta g_A$ wherein $\eta$ is a learning rate, for example, $\eta = 0.01$.

The participant B calculates a gradient of the model loss function with respect to the model parameter $W_2$. For the logistic regression (LogR) model, the gradient of the model loss function with respect to the model parameter $W_2$ is the following formula (4):

$$gB = \hat{\delta} x_B^m + r_B - r_B = \hat{\delta} x_1^m \qquad (4).$$

The participant B updates the model parameter locally: $W_1 = W_1 - \eta g_B$ wherein $\eta$ is a learning rate, for example, $\eta = 0.01$.

In some embodiments of this application, the participant A and the participant B can use different learning rates to update their respective local model parameters.

In some embodiments of this application, in response to that a service side device (a service data holder) of the service data processing system migrates or reconfigures the system, the service side device can purchase a block chain network service to acquire information stored in the block chain network, thereby achieving a processing apparatus for fast service data processing. For example, both the service participant A and the service participant B in this embodiment can purchase the services of the block chain network, and become corresponding nodes in the block chain network through the deployed service side device. The virtual sample, the sample set intersection, the first key set, the second key set, the federated model parameter and the target service data can be sent to the block chain network, such that the node of the block chain network fills the virtual sample, the sample set intersection, the first key set, the second key set, the federated model parameter and the target service data into a new block. In addition, the new block is appended to the end of the block chain in response to that the consensus is reached on the new block. In some embodiments of this application, in response to that a data synchronization request is received from other node in the block chain network, the authority of the other node can be verified in response to the data synchronization request. In response to that the authority of the other node is verified, the data synchronization between the current node and the other node is controlled, so that the other node can acquires the virtual sample, the sample set intersection, the first key set, the second key set, the federated model parameter and the target service data.

In some embodiments, a corresponding object identifier may be, in response to a query request, acquired by parsing the query request; authority information in a target block in the block chain network is acquired according to the object identifier; the matching between the authority information and the object identifier is verified; in response to that the permission information matches the object identifier, the corresponding virtual sample, sample set intersection, first key set, second key set, federated model parameter and target service data are acquired in the block chain network; and the acquired corresponding virtual sample, sample set intersection, first key set, second key set, federated model parameter and target service data are pushed to a corresponding client in response to the query request.

In some embodiments, at least one of the virtual sample, the sample set intersection, the first key set, the second key set and a federated model parameter may be sent to a server; and any service side device may acquire at least one of the virtual sample, the sample set intersection, the first key set, the second key set, and the federated model parameter from the server while performing service data processing. The server may be a client server which is configured to store at least one of the virtual sample, the sample set intersection, the first key set, the second key set and a federated model parameter.

The embodiments of this application can be implemented in combination with a cloud technology. The cloud technology refers to a hosting technology that unifies a series of resources such as hardware, software and network in a wide area network or a local area network to realize the calculation, storage, processing and sharing of data, and may be understood as a general term for network technology, information technology, integration technology, management platform technology and application technology based on cloud computing service model applications. Background services of a technical network system require a lot of computing and storage resources, such as video websites, picture websites and more portal websites, so the cloud technology needs to be supported by cloud computing.

In addition, cloud computing is a computing mode, in which computing tasks are distributed on a resource pool formed by a large quantity of computers, so that various application systems can obtain computing power, storage space, and information services according to requirements. A network that provides resources is referred to as a "cloud". For a user, resources in a "cloud" seem to be infinitely expandable, and can be obtained readily, used on demand, expanded readily, and paid for use. As a basic capability provider of cloud computing, it will establish a cloud computing resource pool platform (referred to as a cloud platform), generally referred to as Infrastructure as a Service (IaaS), and deploy various types of virtual resources in the resource pool for external customers choose and use. The cloud computing resource pool includes at least: a computing device (which may be a virtualized machine, including an operating system), a storage device, and a network device.

As shown in FIG. 1, the federated model training method provided by this embodiment of this application can be implemented by a corresponding cloud device, for example: different service side devices (including the service side device 10-1 and the service side device 10-2) are directly connected to a service side device 200 located in the cloud. It is worth noting that the service side device 200 may be a physical device or a virtualized device.

The federated model training method provided by this application is further described below in combination with different real-time scenarios, wherein cross-industry cooperation scenarios for financial risk control scenarios, such as a service side device correspond to a credit company A and a bank B, respectively. The credit company A receives a loan credit verification from the user shown in Table 1.

Table 1

|  | User ID | Request |
|---|---|---|
| Service of credit company A | 30000 | Credit verification |
| | 30001 | Credit verification |
| | 30002 | Credit verification |
| | 30003 | Credit verification |
| | 30004 | Credit verification |

In order to further control risks, the credit company A hopes to screen out those users with low or unknown deposits before issuing loans, and the user's deposit information is outside a service scope of the credit company A.

Meanwhile, Bank B has a collection of user ID cards whose deposits are higher than 10,000 yuan, where S1={Telephone numbers of different users}, referring to Table 2. Bank B can use data of the credit company A for further risk control, that is, calculate $S_1 \cap S_2$ to obtain final recommendations.

Table 2

|  | User telephone number | Credit record |
|---|---|---|
| Set s2 mastered by Bank B | 139XXXX | Excellent |
|  | 133xxx | Good |
|  | 136XXXX | Poor |

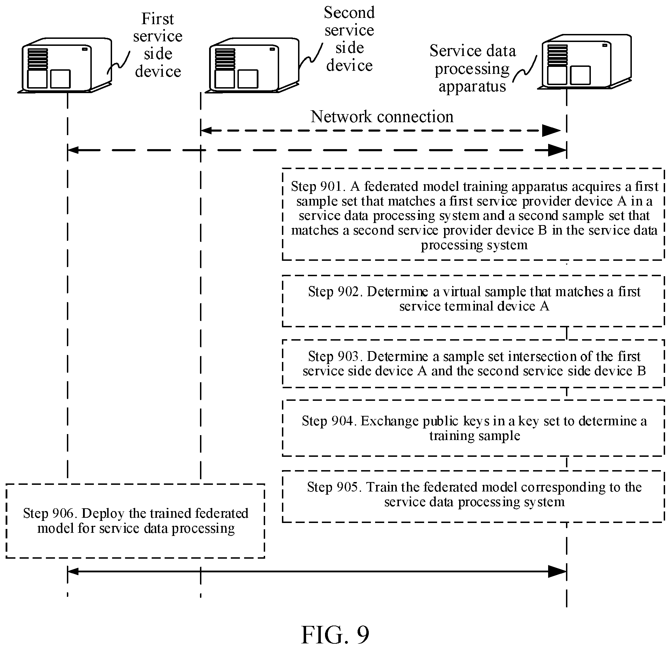

FIG. 9 is an optional schematic flowchart of a federated model training method provided by an embodiment of this application. Referring to FIG. 9, the method may include the following steps 901-906.

In step 901: the federated model training apparatus acquires a first sample set associated with a first service side device A in a service data processing system and a second sample set associated with a second service side device B in the service data processing system.

In step 902: a virtual sample associated with the first service side device is determined.

In step 903: a sample set intersection of the first service side device A and the second service side device B is determined.

In step 904: public keys in the key set are exchanged to determine a training sample.

In step 905: the federated model is trained.

In step 906: the trained federated model is deployed for service data processing.

In this embodiment, the first sample set associated with the first service side device in the service data processing system and the second sample set associated with the second service side device in the service data processing system are acquired, wherein the service data processing system includes at least the first service side device and the second service side device; a virtual sample is determined according to the first sample set; a sample set intersection is determined based on the virtual sample and the second sample set; the first key set of the first service side device and the second key set of the second service side device are obtained; the sample set intersection is processed using the first key set and the second key set to obtain a training sample; and a federated model is trained based on the training sample. Therefore, the computational cost is reduced in the case of ensuring that data is not exchanged and the task of determining the federated model parameter is completed, thereby improving the efficiency of data processing; and the processing of service data can be implemented in a mobile device, thereby saving the user's waiting time and ensuring that privacy data is not leaked.

It can be understood that, in this embodiment of this application, related data such as user information are involved, for example, service data related to user information, a first sample set, a second sample set, etc. In response to that the embodiments of this application are applied to specific products or technologies, user permission or consent needs to be acquired, and the collection, use and processing of related data need to comply with relevant laws, regulations and standards of relevant countries and regions.

The following continues to describe an exemplary structure in which the federated model training apparatus provided in this embodiment of this application is implemented as a software module. In some embodiments, as shown in FIG. 2, the federated model training apparatus includes:

an information transmission module 2081 configured to acquire a first sample set associated with a first service side device in a service data processing system, and a second sample set associated with a second service side device in the service data processing system, wherein the service data processing system includes at least the first service side device and the second service side device; and

an information processing module 2082 configured to determine a virtual sample according to the first sample set.

The information processing module 2082 is further configured to determine a sample set intersection based on the virtual sample and the second sample set.

The information processing module 2082 is further configured to obtain a first key set of the first service side device and a second key set of the second service side device.

The information processing module 2082 is further configured to process the sample set intersection using the first key set and the second key set to obtain a training sample.

The information processing module 2082 is further configured to train a federated model based on the training sample.

In some embodiments, the information processing module 2082 is further configured to: determine, based on a service type of the first service side device, a sample set associated with the first service side device; determine, based on a service type of the second service side device, a sample set associated with the second service side device; and perform sample alignment processing on the sample set associated with the first service side device and the sample set associated with the second service side device to obtain the first sample set associated with the first service side device and the second sample set associated with the second service side device.

In some embodiments, the information processing module 2082 is further configured to: determine a value parameter and a distribution parameter of a sample ID in the first sample set; and generate, based on the value parameter and the distribution parameter of the sample ID in the first sample set, the virtual sample associated with the first service side device.

In some embodiments, the information processing module 2082 is further configured to: determine, based on a device type of the first service side device and a device type of the second service side device, a process identifier of a target application process; determine a data intersection set of the first sample set and the second sample set; invoke the target application process based on the process identifier to obtain a first virtual sample set corresponding to the first service side device and a second virtual sample set corresponding to the second service side device, which are output by the target application process; invoking the target application process based on the data intersection set, the first virtual sample set and the second virtual sample set to obtain the virtual sample output by the target application process.

In some embodiments, the information processing module 2082 is further configured to: combine the virtual sample with the first sample set to obtain the first sample set including the virtual sample; traverse the first sample set including the virtual sample to obtain an ID set of the virtual sample; and traverse the first sample set including the virtual sample and the second sample set to obtain the sample set intersection of the first sample set including the virtual sample and the second sample set.

In some embodiments, the information processing module 2082 is further configured to: perform, based on the first key set and the second key set, an exchange operation between a public key of the first service side device and a public key of the second service side device to obtain an initial parameter of the federated model; determine a number of samples that matches the service data processing system; and process the sample set intersection according to the number of samples and the initial parameter to obtain a training sample associated with the service data processing system.

In some embodiments, the information processing module 2082 is further configured to: substitute the training sample into a loss function corresponding to the federated model; determining a model updating parameter of the federated model in response to the loss function satisfying a convergence condition; and determine, based on the model updating parameter of the federated model, a federated model parameter of the federated model.

In some embodiments, the apparatus further includes: an adjusting module configured to adjust, by the first service side device, a residual corresponding to the virtual sample corresponding to the model updating parameter, or a degree of impact of the virtual sample on the model parameter of the federated model, in training the federated model based on the training sample.

In some embodiments, the adjusting module is further configured to: trigger, in training the federated model based on the training sample, the target application process to perform the following process: adjusting the residual corresponding to the virtual sample corresponding to the model updating parameter, or the degree of impact of the virtual sample on the model parameter of the federated model.

In some embodiments, the apparatus further includes: a zero setting module configured to, in response to that any service side device uses the trained federated model to process service data, set the virtual sample associated with the service side device to zero, wherein a service data processing environment after the virtual sample associated with the service side device is set to zero is adapted to a service data processing environment where the service side device is currently located.

In some embodiments, the apparatus further includes: a transmitting module configured to transmit at least one of the virtual sample, the sample set intersection, the first key set, the second key set and a federated model parameter to a server, any service side device may acquire at least one of the virtual sample, the sample set intersection, the first key set, the second key set, and the federated model parameter from the server while performing service data processing.

In addition, Descriptions of the apparatus embodiments are similar to the descriptions of the method embodiments. The apparatus embodiments have beneficial effects similar to those of the method embodiments and thus are not repeatedly described. Refer to descriptions in the method embodiments of this application for technical details undisclosed in the apparatus embodiments of this application.

According to an aspect of the embodiments of this application, a computer program product or a computer program is provided, the computer program product or the computer program including computer instructions, the computer instructions being stored in a computer-readable storage medium. A processor of a computer device reads the computer instructions from the computer-readable storage medium, and executes the computer instructions, to cause the computer device to perform the foregoing method in the embodiment of this application.

The foregoing descriptions are merely preferred embodiments of this application, but are not intended to limit this application. Any modification, equivalent replacement and improvement made within the spirit and principle of this application shall fall within the protection scope of this application.

**Claims**

1. A federated model training method, which is executed by an electronic device and comprises:

   acquiring a first sample set associated with a first service side device in a service data processing system, and a second sample set associated with a second service side device in the service data processing system;
   determining a virtual sample according to the first sample set;
   determining a sample set intersection based on the virtual sample and the second sample set;
   obtaining a first key set of the first service side device and a second key set of the second service side device;
   processing the sample set intersection using the first key set and the second key set to obtain a training sample; and
   training a federated model based on the training sample.

2. The method according to claim 1, wherein the acquiring the first sample set associated with the first service side device in the service data processing system and the second sample set in the service data processing system comprises:

   determining, based on a service type of the first service side device, a sample set associated with the first service side device;
   determining, based on a service type of the second service side device, a sample set associated with the second service side device; and
   performing sample alignment processing on the sample set associated with the first service side device and the sample set associated with the second service side device to obtain the first sample set associated with the first service side device and the second sample set.

3. The method according to claim 1, wherein the determining the virtual sample according to the first sample set comprises:

   determining a value parameter and a distribution parameter of a sample ID in the first sample set; and
   generating, based on the value parameter and the distribution parameter of the sample ID in the first sample set, the virtual sample.

4. The method according to claim 1, wherein the determining the virtual sample according to the first sample set comprises:

   determining, based on a device type of the first service side device and a device type of the second service side device, a process identifier of a target application process;
   determining a data intersection set of the first sample set and the second sample set;
   invoking the target application process based on the process identifier to obtain a first virtual sample set corresponding to the first service side device and a second virtual sample set corresponding to the second service side device, wherein the first virtual sample set and the second virtual sample set are output by the target application process; and
   invoking the target application process based on the data intersection set, the first virtual sample set and the second virtual sample set to obtain the virtual sample output by the target application process.

5. The method according to claim 3 or 4, wherein the determining the sample set intersection based on the virtual sample and the second sample set comprises:

combining the virtual sample with the first sample set to obtain the first sample set including the virtual sample; traversing the first sample set including the virtual sample to obtain an ID set of the virtual sample; and traversing the first sample set including the virtual sample and the second sample set to obtain the sample set intersection of the first sample set including the virtual sample and the second sample set.

6. The method according to claim 1, wherein the processing the sample set intersection using the first key set and the second key set to obtain the training sample comprises:

performing, based on the first key set and the second key set, an exchange operation between a public key of the first service side device and a public key of the second service side device to obtain an initial parameter of the federated model;
determining a number of samples that matches the service data processing system; and
processing the sample set intersection according to the number of samples and the initial parameter to obtain the training sample.

7. The method according to claim 1, wherein the training the federated model based on the training sample comprises:

substituting the training sample into a loss function corresponding to the federated model;
determining a model updating parameter of the federated model in response to the loss function satisfying a convergence condition; and
determining, based on the model updating parameter of the federated model, a federated model parameter of the federated model.

8. The method according to claim 7, wherein the method further comprises:
in training the federated model based on the training sample, adjusting, by the first service side device, a residual corresponding to the virtual sample corresponding to the model updating parameter, or a degree of impact of the virtual sample on the model parameter of the federated model.

9. The method according to claim 7, wherein the method further comprises:
in training the federated model based on the training sample, triggering a target application process to perform:
adjusting the residual corresponding to the virtual sample corresponding to the model updating parameter, or the degree of impact of the virtual sample on the model parameter of the federated model.

10. The method according to any one of claims 1 to 4, or any one of claims 6 to 9, wherein the method further comprises:

in response to that any service side device uses the trained federated model to process service data, setting a virtual sample associated with the any service side device to zero,
wherein a service data processing environment after the virtual sample associated with the any service side device is set to zero is adapted to a service data processing environment where the any service side device is currently located.

11. The method according to any one of claims 1 to 4, or any one of claims 6 to 9, wherein the method further comprises:

transmitting at least one of the virtual sample, the sample set intersection, the first key set, the second key set and a federated model parameter to a server; and
acquiring, by any service side device, at least one of the virtual sample, the sample set intersection, the first key set, the second key set, and the federated model parameter from the server while performing service data processing.

12. A federated model training apparatus, comprising:

an information transmission module configured to acquire a first sample set associated with a first service side device in a service data processing system, and a second sample set associated with a second service side device in the service data processing system; and
an information processing module configured to determine a virtual sample according to the first sample set, wherein
the information processing module is configured to determine a sample set intersection based on the virtual sample and the second sample set;

the information processing module is configured to obtain a first key set of the first service side device and a second key set of the second service side device;

the information processing module is configured to process the sample set intersection using the first key set and the second key set to obtain a training sample; and

the information processing module is configured to train a federated model based on the training sample.

13. An electronic device, comprising:

a memory, configured to store executable instructions; and

a processor, configured to implement, when executing the executable instructions stored in the memory, the federated model training method according to any one of claims 1 to 11.

14. A computer-readable storage medium, storing executable instructions, the executable instructions, when executed by a processor, implementing the federated model training method according to any one of claims 1 to 11.

15. A computer program product or a computer program is provided, the computer program product or the computer program comprising computer instructions, the computer instructions being stored in a computer-readable storage medium;

a processor of an electronic device is configured to read the computer instruction from the computer-readable storage medium and execute the computer instruction to implement the federated model training method according to any one of claims 1 to 11.

Service
side device
200

Acquire a data processing result

Data processing request

10-1

Service
side
device

Acquire a data
processing result

...

Service
side
device

10-2

FIG. 1

Federated model training apparatus

202

201

Processor

Memory

Information
transmission
module 2081

205

204

203

Network
interface

User interface

Information
processing module
2082

FIG. 2

First
service side
device

Second
service side
device

service data
processing
apparatus

Network connection

Step 301. The federated model training apparatus acquires a first sample set associated with a first service side device in a service data processing system, and a second sample set associated with a second service side device in the service data processing system

Step 302. The federated model training apparatus determines a virtual sample according to the first sample set

Step 303. The federated model training apparatus determines a sample set intersection based on the virtual sample and the second sample set

S304. The federated model training apparatus obtains a first key set of the first service side device and a second key set of the second service side device

S305. The federated model training apparatus processes the sample set intersection using the first key set and the second key set to obtain a training sample

S306. The federated model training apparatus trains a federated model based on the training sample

## FIG. 3

Vertical federated learning: feature division, data feature increase

| ID | X1 | X2 | X3 | Y | X4 | X5 | ID |
|----|----|----|----|---|----|----|----|
| u1 | | | | | | | |
| u2 | | | | | | | u2 |
| u3 | | | | | | | u3 |
| | | | | | | | u4 |

Sample alignment

Participant A

Participant B

## FIG. 4

| User | X1 | X2 | X3 | X4 | X5 | Y |
|------|----|----|----|----|----|---|
| u1 | | | | | | |
| u2 | | | | | | |
| u7 | | | | | | |

| User | X3 | X4 | X5 |
|------|----|----|----|
| u1 | | | |
| u2 | | | |
| u4 | | | |
| u6 | | | |
| u7 | | | |

Participant A

| User | X1 | X2 | Y |
|------|----|----|---|
| u1 | | | |
| u2 | | | |
| u3 | | | |
| u5 | | | |
| u7 | | | |

Participant B

## FIG. 5

Participant A      Participant B      Participant C

Step 61. Perform key negotiation

Step 62. Transmit an ID set of encrypted real samples

Step 63. Transmit an ID set of encrypted real samples

Step 64. Solve a sample ID intersection $I_1$

Step 65. The number of elements in the intersection $I_1$

Step 65. The number of elements in the intersection $I_1$

## FIG. 6

Participant A

| $X_1$ |
|---|
| $W_1$ |
| $R_2$ |

| $X_2$ |
|---|
| $W_2$ |
| $R_1$ |

Participant B

Step 701. Generate a key set that matches different service side devices

Step 704. The participants A and B respectively perform homomorphic encryption on the random masks $R_2$ and $R_1$, and transmit them to each other

(6) Calculate $pk_2(R_1)X_1$

Step 708. The participant A calculates S, a loss function and a gradient multiplier δ

(9) Calculate $S_1 = W_1X_1 + R_2X_2 - r_2 + r_1$

(11) Calculate $S = S_1 + S_2$, calculate the loss function, gradient multiplier δ, gradient $g_A$, and $pk_1(\delta)$, and update the parameter $W_1$ to generate δ

(15) Decrypt $pk_1(\delta)\hat{X}_2 + r_B$

Step 702. Transmit public key information

(2) $pk_2$

Step 705. The participant A calculates $pk_2(R_1)X_1^{(m)}$

(5) $pk_1(R_2)$

(7) $pk_2(R_1)X_1 - r_1$

Step 707. The participant A and the participant B respectively perform calculation processing

Step 710. The participant transmits $S_2$

(12) $pk_1(\delta)\hat{}$

(14) $pk_1(\delta)\hat{X}_2 + r_B$

(16) $\hat{\delta}X_2 + r_B$

(1) Generate $pk_2$ and $sk_2$

Step 703. The participants A and B randomly initialize model parameters $W_1$ and $W_2$ respectively and generate random masks $R_2$ and $R_1$

(4) Encrypt $R_1$ with $pk_2$  $pk_2(R_1)$

Step 706. The participant A decrypts to obtain $R_2X_2^{(m)} - r_2$

(8) Decrypt to obtain $R_1X_1 - r_1$

Step 709. The participant B transmits $pk_1(\delta)X_2^m + r_B$ to the participant A

(13) Calculate $pk_1(\delta)\hat{X}_2 + r_B$

(17) Calculate a gradient $g_B$, and updating $W_2$

FIG. 7

Participant A        Participant B        Participant C

Iteratively executing
steps 701-710

Step 712. The participant A transmits the gradient
multiplier δ to the participant C

Step 713. The participate C transmits $pk_3(\hat{\delta})$ to the participant
A and the participant B

Step 714. The participant A calculates $pk_3(\hat{\delta})X_1^m + r_A$ , and
transmits $pk_3(\hat{\delta})X_1^m + r_A$ to the participant C

Step 715. The participant A decrypts $pk_1(\hat{\delta})X_2^{(m)} + r_B$

Step 713. The participate C transmits $pk_3(\hat{\delta})$ to the participant
A and the participant B

Step 716. The participant A transmits $(\hat{\delta})X_2^{(m)} + r_B$
to the participant B

Step 714. The participant A calculates $pk_3(\hat{\delta})X_1^m + r_A$ , and
transmits $pk_3(\hat{\delta})X_1^m + r_A$ to the participant C

Step 715. The participant A decrypts $pk_1(\hat{\delta})X_2^{(m)} + r_B$

$g_B = \hat{\delta}X_2$

FIG. 8

First service side device

Second service side device

Service data processing apparatus

Network connection

Step 901. A federated model training apparatus acquires a first sample set that matches a first service provider device A in a service data processing system and a second sample set that matches a second service provider device B in the service data processing system

Step 902. Determine a virtual sample that matches a first service terminal device A

Step 903. Determine a sample set intersection of the first service side device A and the second service side device B

Step 904. Exchange public keys in a key set to determine a training sample

Step 905. Train the federated model corresponding to the service data processing system

Step 906. Deploy the trained federated model for service data processing

FIG. 9

## INTERNATIONAL SEARCH REPORT

| | International application No. |
|---|---|
| | **PCT/CN2022/071876** |

### A. CLASSIFICATION OF SUBJECT MATTER

G06F 21/60(2013.01)i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

EPODOC, WPI, CNPAT, CNKI, IEEE, google学术: 程勇, 陶阳宇, 联邦学习, 联邦模型, 纵向, 斜向, 样本, 交集, 虚拟, 样本, 加密, 密钥, cheng yong, tao yangyu, federated, learn, model, horizontal, vertical, samples, intersection, virtual, encryption, key

### C. DOCUMENTS CONSIDERED TO BE RELEVANT

| Category* | Citation of document, with indication, where appropriate, of the relevant passages | Relevant to claim No. |
|---|---|---|
| PX | CN 113591097 A (TENCENT TECHNOLOGY SHENZHEN CO., LTD.) 02 November 2021 (2021-11-02)<br> description, paragraphs 79-181, figures 3-9 | 1-15 |
| A | CN 111784001 A (TENCENT TECHNOLOGY SHENZHEN CO., LTD.) 16 October 2020 (2020-10-16)<br> abstract, description 5-8, 48 and paragraphs 74-122, figures 5-6 | 1-15 |
| A | CN 110633806 A (SHENZHEN QIANHAI WEBANK CO., LTD.) 31 December 2019 (2019-12-31)<br> entire document | 1-15 |
| A | CN 112073196 A (TENCENT TECHNOLOGY SHENZHEN CO., LTD.) 11 December 2020 (2020-12-11)<br> entire document | 1-15 |
| A | CN 111985649 A (HUAWEI TECHNOLOGIES CO., LTD.) 24 November 2020 (2020-11-24)<br> entire document | 1-15 |
| A | CN 110942154 A (SHENZHEN QIANHAI WEBANK CO., LTD.) 31 March 2020 (2020-03-31)<br> entire document | 1-15 |

☑ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 March 2022** | **29 March 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| | INTERNATIONAL SEARCH REPORT | International application No. |
|---|---|---|
| | | **PCT/CN2022/071876** |

**C. DOCUMENTS CONSIDERED TO BE RELEVANT**

| Category* | Citation of document, with indication, where appropriate, of the relevant passages | Relevant to claim No. |
|---|---|---|
| A | US 2020218937 A1 (INTERNATIONAL BUSINESS MACHINES CORPORATION) 09 July 2020 (2020-07-09)<br>entire document | 1-15 |

Form PCT/ISA/210 (second sheet) (January 2015)

**INTERNATIONAL SEARCH REPORT**
Information on patent family members

International application No.

**PCT/CN2022/071876**

| Patent document cited in search report | | | Publication date (day/month/year) | Patent family member(s) | | | Publication date (day/month/year) |
|---|---|---|---|---|---|---|---|
| CN | 113591097 | A | 02 November 2021 | None | | | |
| CN | 111784001 | A | 16 October 2020 | None | | | |
| CN | 110633806 | A | 31 December 2019 | None | | | |
| CN | 112073196 | A | 11 December 2020 | None | | | |
| CN | 111985649 | A | 24 November 2020 | None | | | |
| CN | 110942154 | A | 31 March 2020 | None | | | |
| US | 2020218937 | A1 | 09 July 2020 | US | 11010637 | B2 | 18 May 2021 |

Form PCT/ISA/210 (patent family annex) (January 2015)

**EP 4 198 783 A1**

**REFERENCES CITED IN THE DESCRIPTION**

**Patent documents cited in the description**

- CN 202110084293